# EUROPÄISCHE PATENTANMELDUNG

(11) **EP 2 592 580 A1**
(43) Veröffentlichungstag der Anmeldung: **15.05.2013**
(21) Anmeldenummer: 12192084.7
(22) Anmeldetag: 09.11.2012
(51) Int. Cl.: G06F 21/36, G06F 21/34

(54) **Verfahren zum Bereitstellen von Daten und/oder Interaktionsmöglichkeiten zwischen einem Nutzer und einer Datenverarbeitungsanordnung**

(30) Priorität: 09.11.2011 DE 102011117979
(71) Anmelder: Deutsche Telekom AG, 53113 Bonn (DE)
(72) Erfinder: Seifert, Caroline, 53227 Bonn (DE); Zeini, Dr. Babak, 50859 Köln (DE); Hennings, Lennart, 33611 Bielefeld (DE); Manuel, Mark, 81477 München (DE)
(74) Vertreter: Braun-Dullaeus, Karl-Ulrich

(57) **Zusammenfassung**

Verfahren zum Bereitstellen von Daten und/oder lnteraktionsmöglichkeiten zwischen einem Nutzer und einer Datenverarbeitungsanordnung 9, wobei die Datenverarbeitungsanordnung 9 insbesondere Teil einer Rechnerwolke 1 ("Cloud Computing") ist, umfassend die folgenden Verfahrensschritte:
Hinterlegen eines beliebigen aber individuellen Gegenstandes 4 in einem Erfassungsbereich 5 der Datenverarbeitungsanordnung 9,
Registrieren einer dem Gegenstand 4 inhärenten physikalischen Eigenschaft, insbesondere der individuellen Gestaltung, durch die Datenverarbeitungsanordnung 9, wobei dem Gegenstand 4 von der Datenverarbeitungsanordnung 9 Daten und/oder Interaktionsmöglichkeiten zugeordnet werden,
Abrufen und Bereitstellen der Daten und/oder Interaktionsmöglichkeiten, sobald der Gegenstand 4 zu einem späteren Zeitpunkt anhand seiner physikalischen Eigenschaft von der Datenverarbeitungsanordnung 9 oder von einer damit in Verbindung stehenden Anordnung erkannt wird.

## Beschreibung

Die Erfindung betrifft ein Verfahren zum Bereitstellen von Daten und/oder Interaktionsmöglichkeiten zwischen einem Nutzer und einer Datenverarbeitungsanordnung.

Üblicherweise verläuft die Interaktion eines Nutzers mit einer Datenverarbeitungsanordnung, beispielsweise einem Computer oder einem Mobiltelefon, über ein spezielles Eingabegerät. Ein solches Eingabegerät kann beispielsweise eine Tastatur, eine Maus, ein Touchpad oder Ähnliches sein. Das Eingabegerät liefert definierte elektronische Signale, die die Eingaben des Nutzers in elektronisch erfassbarer Form darstellen und die durch die Datenverarbeitungsanordnung weiterverarbeitet werden können. Eine Authentifizierung des Nutzers an der Datenverarbeitungsanordnung erfolgt in der Regel durch Eingabe von Nutzername und Passwort oder durch Identifikationsgegenstände. Solche Identifikationsgegenstände geben dann in der Regel ein definiertes Signal aus, welches durch die Datenverarbeitungseinheit erkannt und weiterverarbeitet werden kann. Ein solches Signal kann beispielsweise ein Funksignal mit einer speziell kodierten Nachricht sein. Es können aber auch Magnetkarten oder USB-Sticks verwendet werden. Der Zugriff auf Daten erfolgt in der Regel durch lokales Anbinden einer Speichereinheit, wie z.B. einem USB Stick, an einer Arbeitsstation. Es können aber auch auf in einem Netzwerk abgelegte Daten zugegriffen werden. Hierzu ist zumeist eine bereits angesprochene Authentifikation erforderlich.

Es ist Aufgabe der vorliegenden Erfindung, ein verbessertes Verfahren zur Bereitstellung von Daten und/oder Interaktionsmöglichkeiten zwischen einem Nutzer und einer Datenverarbeitungsanordnung zu entwerfen.

Die der Erfindung zugrundeliegende Aufgabe wird gelöst durch ein Verfahren nach Anspruch 1 sowie einer Datenverarbeitungsanordnung nach Anspruch 9. Bevorzugte Ausgestaltungen ergeben sich aus den Unteransprüchen.

Der Kern der Erfindung liegt insbesondere darin, dass nahezu jeglicher Gegenstand herangezogen werden kann, um Interaktionsmöglichkeiten bzw. Daten bereitzustellen, da es sich lediglich um irgendeinen Gegenstand handeln muss. Dabei wird insbesondere ein passiver Gegenstand verwendet, welcher ein solcher ist, der selbst keine definierten Signale an eine Datenverarbeitungsanordnung abgeben kann oder zumindest im Rahmen des vorliegenden Verfahrens nicht abgibt, selbst dann nicht, wenn eine definierte Anregung, z. B. eine magnetische Anregung (wie bei einem RFID-Chip) oder eine optische Anregung (wie bei einem Barcode), erfolgt. Das reflekiterte Bild eines Barcodes wird daher als definiertes Signal angesehen. Der Gegenstand stellt damit einen "Schlüssel" zur Interaktion mit der Datenverarbeitungsanordnung dar und kann im Wesentlichen jeder insbesondere körperliche Gegenstand sein. Der Gegenstand muss dabei zunächst der Datenverarbeitungseinheit einmal vorgestellt werden und damit als Schlüssel festgelegt werden. Wird dieser Gegenstand dann später einmal wieder von der Datenverarbeitungseinheit erkannt, dann können die ihm zugewiesen Interaktionsmöglichkeiten oder Daten bereit gestellt werden. Der entstehende Schlüssel ist dabei schnell wechselbar und ist relativ fälschungssicher. Die Schlüsselfunktion des Gegenstandes kann für einen Dritten überhaupt nicht ersichtlich sein. So kann beispielsweise ein üblicher Gegenstand, den ein Nutzer bei sich führt, wie beispielsweise der Haustürschlüssel oder der Geldbeutel oder eine Kombination einzelner unterschiedlicher Gegenstände, unspektakulär auf den Schreibtisch gelegt werden. Dieser "Schlüssel" wird dann erkannt und eine Freigabe zur Interaktion bzw. der Zugriff auf Daten wird hergestellt bzw. ermöglicht. Dabei kann auch offen bleiben, welches Merkmal genau an dem Gegenstand als Schlüssel erkannt wird, so dass ein Nachmachen des Schlüssels nicht ohne weiteres möglich ist. Insbesondere eine Kombination einzelner Gegenstände, z.B. ein Schlüsselbund, eignet sich sehr gut, da diese Kombination in der Regel nicht nachgemacht werden kann.

Unter einer Datenverarbeitungsanordnung können im Wesentlichen Computer oder andere Benutzerterminals verstanden werden. Auch ein Netzwerk solcher Endgeräte kann als Datenverarbeitungsanordnung angesehen werden. Aber auch ein Fahrzeug kann als Datenverarbeitungsanordnung oder Teil einer solchen verstanden werden. Durch den Gegenstand kann z. B. die Wegfahrsperre deaktiviert werden, wobei dann die Motorsteuerung einen Motorstartbefehl als Interaktion ermöglicht.

Das Verfahren zum Erkennen oder zur Interaktion erfolgt dabei vorzugsweise über eine optische Bilderfassung. Da es sich bei dem Gegenstand um insbesondere um einen passiven Gegenstand handelt, bleiben dabei Signale wie definierte Lichtpulse oder Ähnliches bei der optischen Bilderfassung unberücksichtigt. Vielmehr wird das makroskopische Bild, also das äußerliche Erscheinungsbild eines Gegenstandes, wie beispielsweise der Schlüssel oder die Geldbörse, als solches erkannt.

Vorzugsweise wird ein definierter Betriebszustand der Datenverarbeitungsanordnung dem Gegenstand zugeordnet, wobei der zugeordneten Betriebzustand abgerufen wird, wenn der Gegenstand insbesondere zu einem späteren Zeitpunkt wieder erkannt wird. Anschließend wird die Datenverarbeitungseinheit in den zugeordneten Betriebszustand versetzt. Der Begriff Betriebszustand kann weitläufig verstanden werden und umfasst insbesondere auch eine Art Freigabezustand, der bisher häufig durch persönliche Authentifizierung (Benutzername -Passwort - Kombination) überprüft wurde. Mit dem Begriff Betriebszustand der Datenverarbeitungseinheit sind dabei aber auch die Zustände, wie personenbezogene Benutzeroberflächen, von einzelnen Benutzerterminals innerhalb eines Netzwerkes gemeint. Der zugeordnete Betriebszustand ist dabei aber nicht auf einzelne Benutzerterminals beschränkt, sondern kann mit Hilfe des Gegenstandes dann auch auf einen anderen Benutzterminals der Datenverarbeitungsanordnung übertragen werden. Wenn der Nutzer sich an einem Benutzterminal anmeldet, so kann er die Benutzeroberfläche wieder in dem Zustand vorfinden, zu dem er z. B. am Vortag das selbe oder ein anderes Benutzerterminal der Datenverarbeitungsanordnung verlassen hat. Als Benutzerterminal kann eine Komponente der Datenverarbeitungsanordnung angesehen werden, die eine Interaktion mit einem Nutzer ermöglicht, wie beispielsweise ein PC, eine Workstation oder ein mobiles elektronisches Endgerät.

Vorzugsweise kann die Interaktion zumindest teilweise mittels des physischen Gegenstandes erfolgen. Anstelle des Tätigen von Eingaben per üblichem Eingabegerät, wie beispielsweise einer Tastatur oder einer Maus, kann die Interaktion nunmehr anhand des physischen passiven Gegenstandes erfolgen. Ein Bewegen des Gegenstandes, z. B. auf einer Tischoberfläche, kann die Wirkung hervorrufen wie eine Mausbewegung. Im Gegensatz zur Maus wird aber von dem Gegenstand kein definiertes Datensignal abgegeben. Die Bewegung wird daher anhand anderer Erkennungsmittel festgestellt, vorzugsweise mittels der bereits genannten optischen Bilderfassung.

Vorzugsweise werden Eingabebefehle in Form von Gesten von der Datenverarbeitungsanordnung erkannt, wobei die Gesten im Zusammenhang mit dem Gegenstand ausgeführt werden. So können insbesondere Bewegungen der Arme, Hände und/oder des Kopfes des Nutzers in Kombinationen mit dem Gegenstand verwendet werden, um spezifische Eingabebefehle zu vollziehen. Durch die Kombination von Gesten und dem beliebigen Gegenstand können die Nutzereingaben weiter individualisiert werden und damit auch ein höhere Sicherheitsstand hergestellt werden. Für einen außenstehenden Betrachter mag es schwierig sein zu ersehen, welche der tatsächlich getätigten Gesten solche sind, die einer Benutzereingabe zugeordnet werden können. So kann beispielsweise das Einfache Streicheln des Gegenstandes in einer Richtung bedeutungslos sein, während eine Kombination von unterschiedlichen Streichelbewegungen eine definierte, insbesondere sicherheitsrelevante Eingabe bedeutet.

Vorzugsweise wird auf Basis der Erkennung des Gegenstandes dem Nutzer eine von mehreren Zugangsberechtigungsstufen zugewiesen. Der Gegenstand kann dann somit eine Art Zugangsschlüssel sein, der den Zugang zu bestimmten Sicherheitsbereichen oder Login-Stufen ermöglicht bzw. bewusst verhindert. Der Besitzer eines goldfarbenen Gegenstandes kann beispielsweise eine höhere Zugangsberechtigung erhalten, als derjenige, der lediglich einen silberfarbenen Gegenstand innehat.

Im Rahmen einer bevorzugten Interaktionsmöglichkeit können dem Gegenstand Daten zugewiesen werden, die in der Datenverarbeitungsanordnung elektronisch gespeichert sind. Nach dem Erkennen des Gegenstandes kann dem Nutzer dann Zugriff auf diese Daten gewährt werden. Damit wird die Möglichkeit geschaffen, den Gegenstand als eine Art virtueller Speicher zur Verfügung zu stellen, auf dem Daten zwar nicht tatsächlich gespeichert sind, aber eine Nutzung der Daten im Wesentlichen nur dann möglich ist, wenn der Gegenstand erkannt wird. Für den Nutzer ändert sich quasi nichts im Vergleich zur Handhabung mit einem realen Datenträger. Die Daten sind dann aber intern auf der Datenverarbeitungsanordnung gespeichert; der Gegenstand dient damit nur als Freigabemittel. Insbesondere wenn die Eingabe- und Ausgabegeräte der Datenverarbeitungsanordnung an eine sog. Rechnerwolke (Cloudcomputing) angeschlossen ist, können die Daten auch netzwerkweit abgerufen werden, wenn denn eine Authentifikation mit dem Gegenstand erfolgt.

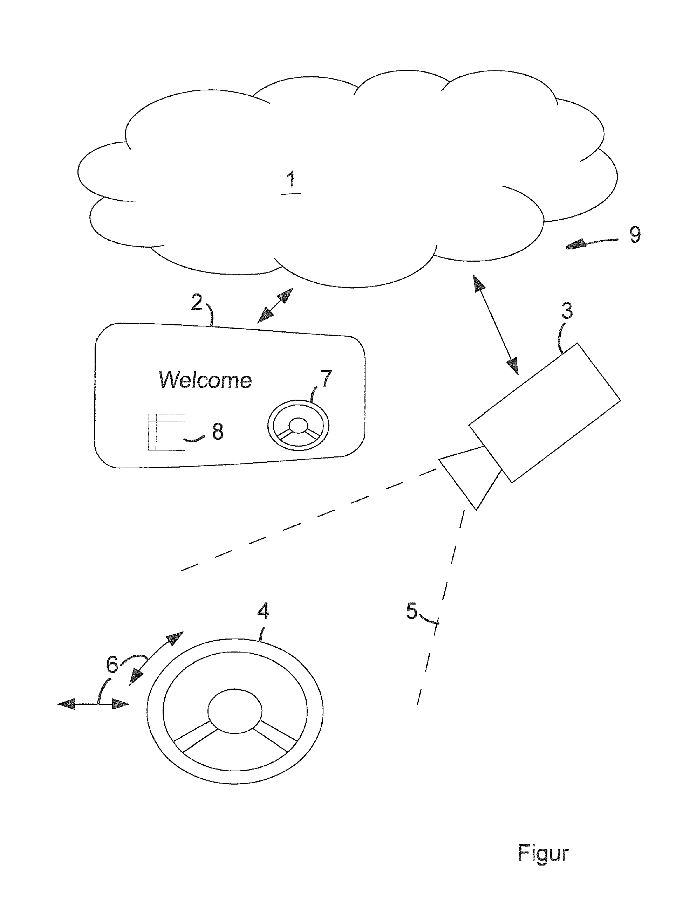

Die Erfindung wird anhand der Figur nachfolgend näher erläutert. Eine Datenverarbeitungsanordnung 9 wird durch eine sogenannte Rechnerwolke 1 im Zusammenhang mit einem Bildschirm 2 und einer daran angeschlossenen optischen Kamera 3 repräsentiert. Die Datenverarbeitungsanordnung 9 kann ferner noch Speichereinheiten und andere Datenverarbeitungseinheiten, wie Benutzerterminals umfassen, die der Rechnerwolke 1 zugeordnet sind. Als passiver Gegenstand ist ein Lenkrad 4 dargestellt, wobei anstelle des Lenkrads auch andere Gegenstände verwenden werden können, die nicht über eine Abgabemöglichkeit von definierten Datensignalen verfügen müssen. Das Lenkrad 4 wird in den Erfassungsbereich 5 der Kamera 3 gebracht. Ein entsprechendes Bild wird dann durch eine Recheneinheit der Datenverarbeitungsanordnung 9 verarbeitet und ausgewertet. Der Bildsschirm 2, die Kamera 3 sowie eine nicht dargestellte Tastatur repräsentieren ein Benutzerterminal. Die eigentliche Rechenarbeit wird auf einem entfernten Rechner der Rechnerwolke 1 durchgeführt.

Das Lenkrad 4 wurde zuvor der Datenverarbeitungseinheit einmal vorgestellt. Dabei wurde das äußere Erscheinungsbild des Lenkrads von der Datenverarbeitungsanordnung erkannt und abgespeichert. Gewisse Interaktionsmöglichkeiten in Form von Zugangsberechtigungen wurden dem Lenkrad zugeordnet.

Wenn erkannt wird, dass dem Lenkrad 4 eine gewisse Zugangsberechtigung zugeordnet ist, erfolgt die Freigabe der Nutzung und des Zugangs des Nutzers zur Datenverarbeitungsanordnung 9. Ein Nutzer kann dann über bekannte Eingabemittel seine Eingabe tätigen. Nach erfolgter Freigabe erscheint dem Nutzer der Bildschirm 2 exakt so, wie er den Bildschirm oder den Bildschirm eines anderen Benutzerterminals am Vortag verlassen hat.

Es ist bevorzugt, dass einzelne Eingabebefehle auch über das Lenkrad 4 selbst erfolgen. So kann beispielsweise ein Drehen des Lenkrads oder ein laterales Bewegen, was durch die Pfeile 6 dargestellt ist, des Lenkrads oder auch Kombinationen einzelner Bewegungen jeweils einen Eingabebefehl darstellen. Kombiniert werden kann ein solcher Eingabebefehl auch mit weiteren Gesten des Nutzers, beispielsweise einer Handbewegung oder einer Kopfbewegung, die gegebenenfalls durch die Kamera 3 oder eine andere Sensoreinheit erfasst werden kann. Die Eingabebefehle, die durch das Lenkrad 4 oder auch andere Gegenstände definiert oder ausgeführt werden können, können zuvor eingelernt werden und sind dann in einer Datenbank abrufbar. Die Datenbank kann in der Rechnerwolke 1 angelegt sein und ist dann damit auch weltweit abrufbar sein.

Auf dem Bildschirm ist das Lenkrad 4 mittels eines Symbols 6 repräsentiert. Ein Symbol 7 einer Datei oder eines anderen Datenobjekts kann, z.B. via Drag-and-Drop, auf das Lenkradsymbol 6 gezogen werden. Damit wird das Datenobjekt virtuell auf dem Lenkrad 4 gespeichert. Das Speichern erfolgt zwar nicht tatsächlich auf dem Lenkrad 4, da das Lenkrad selbst nicht über Speichermittel verfügt. Der Nutzer erhält aber den Eindruck, dass das Datenobjekt auf dem Lenkrad 4 gespeichert wird. Der Nutzer kann nämlich nur dann wieder auf das Datenobjekt zugreifen, wenn er das Lenkrad 4 in den Erkennungsbereich der Kamera 3 oder der Kamera eines anderen Benutzerterminals bringt und es korrekt erkannt wird. Da die Daten tatsächlich auf irgendeinem Server in der Rechnerwolke 1 angeordnet sind, können die Daten auch weltweit mit Hilfe des Lenkrades 4 abgerufen werden. Das Lenkrad stellt somit eine Art mobile Speichereinrichtung wie ein USB-Stick dar. Darauf scheinbar hinterlegte Daten können stets dann abgerufen werden, wenn das Lenkrad durch Erkennen an die Datenverarbeitungsanordnung "angeschlossen" wird. Im Unterschied sind aber die Daten nicht tatsächlich auf dem Lenkrad gespeichert, sondern irgendwo in der Rechnerwolke 1.

Im Rahmen der Figurenbeschreibung wurde ein Lenkrad 4 als beliebiger Gegenstand verwendet. Die Angaben treffen aber ohne Einschränkung auch auf andersartige Gegenstände zu, die als beliebige Gegenstände i.S.d Erfindung verwendet werden.

### Bezugszeichenliste

- 1: Rechnerwolke
- 2: Bildschirm
- 3: Kamera
- 4: Lenkrad
- 5: Erfassungsbereich
- 6: Pfeile
- 7: Symbol
- 8: Datei
- 9: Datenverarbeitungsanordnung

## Patentansprüche

1. Verfahren zum Bereitstellen von Daten und/oder Interaktionsmöglichkeiten zwischen einem Nutzer und einer Datenverarbeitungsanordnung (9), wobei die Datenverarbeitungsanordnung (9) insbesondere Teil einer Rechnerwolke (1) ("Cloud Computing") ist, umfassend die folgenden Verfahrensschritte:
Hinterlegen eines beliebigen aber individuellen Gegenstandes (4) in einem Erfassungsbereich (5) der Datenverarbeitungsanordnung (9),
Registrieren einer dem Gegenstand (4) inhärenten physikalischen Eigenschaft, insbesondere der individuellen Gestaltung, durch die Datenverarbeitungsanordnung (9), wobei dem Gegenstand (4) von der Datenverarbeitungsanordnung (9) Daten und/oder Interaktionsmöglichkeiten zugeordnet werden,
Abrufen und Bereitstellen der Daten und/oder Interaktionsmöglichkeiten, sobald der Gegenstand (4) zu einem späteren Zeitpunkt anhand seiner physikalischen Eigenschaft von der Datenverarbeitungsanordnung (9) oder von einer damit in Verbindung stehenden Anordnung erkannt wird.

2. Verfahren nach Anspruch 1, **dadurch gekennzeichnet, dass** die inhärenten physikalischen Eigenschaft, insbesondere individuelle Gestaltung, des Gegenstandes (4) durch eine der Datenverarbeitungsanordnung (9) zugeordneten optischen Bilderfassung erfasst wird.

3. Verfahren nach einem der vorherigen Ansprüche, **dadurch gekennzeichnet, dass** dem Gegenstand (4) ein definierter Betriebszustand der Datenverarbeitungsanordnung (9) zugeordnet wird, wobei der Betriebszustand abgerufen wird, sobald der Gegenstand (4) erkannt wird, und wobei insbesondere ein Benutzerterminal in den Betriebszustand versetzt wird.

4. Verfahren nach einem der vorherigen Ansprüche, **dadurch gekennzeichnet, dass** mittels des Gegenstandes (4), insbesondere durch Bewegen des physischen Gegenstandes, eine Interaktion mit der Datenverarbeitungsanordnung (9) erfolgt.

5. Verfahren nach einem der vorherigen Ansprüche, **dadurch gekennzeichnet, dass** Eingabebefehle in Form von Gesten von der Datenverarbeitungsanordnung (9) erkannt werden, wobei die Gesten in Zusammenhang mit dem Gegenstand (4) ausgeführt werden.

6. Verfahren nach einem der vorherigen Ansprüche, **dadurch gekennzeichnet, dass** die Interaktion zwischen dem Gegenstand und der Datenverarbeitungsanordnung (9) über eine optische Bilderfassung erfolgt.

7. Verfahren nach einen der vorherigen Ansprüche, **dadurch gekennzeichnet, dass** basierend auf der Erkennung des Gegenstandes (4) dem Nutzer eine von mehreren Zugangsberechtigungsstufen zugewiesen wird.

8. Verfahren nach einem der vorherigen Ansprüche, **dadurch gekennzeichnet, dass** im Rahmen einer Interaktionsmöglichkeit dem physischen Gegenstand Daten (8) zugewiesen werden können, die in der Datenverarbeitungsanordnung (9), insbesondere in einer räumlich entfernten Speichereinrichtung, gespeichert sind, und dass nach Erkennen des physikalischen Gegenstandes (4) dem Nutzer Zugriff auf diese Daten (8) gewährt wird.

9. Datenverarbeitungsanordnung (9), an welcher Interaktionsmöglichkeiten durch ein Verfahren nach einem der vorherigen Ansprüche bereitgestellt werden.

10. Datenverarbeitungsanordnung nach dem vorherigen Anspruch, **dadurch gekennzeichnet, dass** die Datenverarbeitungsanordnung eine Vielzahl von räumlich verteilten Datenverarbeitungseinheiten, insbesondere PCs, Benutzerterminals, Speichereinrichtungen oder ähnliches, umfasst, die über ein Datennetz miteinander verbunden sind ("Cloud Computing").
